# EUROPEAN PATENT APPLICATION

(11) **EP 3 173 734 A1**
(43) Date of publication of application: **31.05.2017**
(21) Application number: 16201207.4
(22) Date of filing: 29.11.2016
(51) Int. Cl.: G01C 3/00, G06T 7/521

(54) **RANGING OBSTACLE AVOIDANCE INSTRUMENT AND RANGING OBSTACLE AVOIDANCE METHOD FOR UNMANNED AERIAL VEHICLE**

(30) Priority: 30.11.2015 CN 201510863272
(71) Applicant: Ewatt Technology Co., Ltd., Wuhan Hubei 430000 (CN)
(72) Inventor: ZAHO, Guocheng, Wuhan, Hubei 430000 (CN); WAN, Yong, Wuhan, Hubei 430000 (CN); ZHANG, Kai, Wuhan, Hubei 430000 (CN)
(74) Representative: Roman, Alexis

(57) **Abstract**

The present invention discloses a ranging obstacle avoidance instrument and a ranging obstacle avoidance method for an unmanned aerial vehicle. The ranging obstacle avoidance instrument includes: a grating emitter for emitting grating onto an obstacle; a camera for shooting a grating image emitted onto the obstacle; a grating processor, connected with the camera and used for processing the grating image shot by the camera, wherein the grating processor judges the distance between each portion of the obstacle and the ranging obstacle avoidance instrument by measuring a distance value between pixel points of the grating image shot by the camera and depending on a proportion of the distance value to an actual distance. The technical problems of low measurement result accuracy and poor anti-jamming capability of the ranging obstacle avoidance instrument in the prior art are solved, and the technical effects of high measurement result accuracy and strong anti-jamming capability of the ranging obstacle avoidance instrument are achieved.

## Description

### Field of the Invention

The present invention relates to the technical field of unmanned aerial vehicles, and particularly to a ranging obstacle avoidance instrument and a ranging obstacle avoidance method for an unmanned aerial vehicle.

### Background of the Invention

A pilotless aircraft is referred to as an "unmanned aerial vehicle", and is an unmanned aircraft that is manipulated by radio remote control equipment and its own program control device. No cockpit is mounted on the unmanned aerial vehicle, but an autopilot, the program control device, a signal collection device and other equipment are installed thereon. Personnel on the ground, on a naval vessel or a master remote control station carries out tracking, positioning, remote control, telemetering and digital transmission on the unmanned aerial vehicle by radar and other equipment. The unmanned aerial vehicle can take off just like an ordinary aircraft under radio remote control or is launched by a booster rocket, and can also be carried by a master into the air for flying.
When the unmanned aerial vehicle is flying in the air, a laser ranging obstacle avoidance device of the unmanned aerial vehicle in the prior art emits a laser signal on an obstacle, detects the laser reflected by the obstacle by a laser-sensitive device of a receiving module and determines the height or distance of the obstacle by measuring a round trip time difference. According to the measurement method, multiple light beams need to be emitted, the requirements on the accuracy of the detection device are very high, and the accuracy is low. Or, the distance therebetween is roughly calculated according to the size of the obstacle in a recorded image, but the anti-jamming capability is poor.

### Summary of the Invention

The present invention provides a ranging obstacle avoidance instrument and a ranging obstacle avoidance method for an unmanned aerial vehicle, in order to solve the technical problems of low measurement result accuracy and poor anti-jamming capability of the ranging obstacle avoidance instrument in the prior art, and to achieve the technical effects of high measurement result accuracy and strong anti-jamming capability of the ranging obstacle avoidance instrument.
To solve the aforementioned technical problems, the present invention provides a ranging obstacle avoidance instrument, including: a grating emitter for emitting grating onto an obstacle; a camera for shooting a grating image emitted onto the obstacle; a grating processor, connected with the camera and used for processing the grating image shot by the camera, wherein the grating processor judges the distance between each portion of the obstacle and the ranging obstacle avoidance instrument by measuring a distance value between pixel points of the grating image shot by the camera and depending on a proportion of the distance value to an actual distance. Preferably, the ranging obstacle avoidance instrument further includes a bracket, one end of the bracket is fixedly connected with the camera, and the other end of the bracket is fixedly connected with the laser grating emitter in a detachable manner. Preferably, the bracket is fixedly connected with the grating emitter by a hoop. Preferably, the bracket is fixedly connected with the grating emitter by a buckle. Preferably, a lens filter of the camera is matched with the type of the grating emitted by the grating emitter.
Preferably, the grating emitted by the grating emitter is visible grating.
Preferably, the grating emitted by the grating emitter is invisible grating.
The present application further provides a ranging obstacle avoidance method for an unmanned aerial vehicle adopting the aforementioned ranging obstacle avoidance instrument. The ranging obstacle avoidance method includes: emitting, by the grating emitter, grating onto an obstacle; shooting, by the camera, a grating image emitted onto the obstacle, and transmitting the grating image to the grating processor; calculating the distance between each portion of the obstacle and the ranging obstacle avoidance instrument according to the grating image, which specifically includes: measuring, by the grating processor, a distance value between pixel points of the grating image shot by the camera, and calculating the distance between each portion of the obstacle and the ranging obstacle avoidance instrument depending on a proportion of the distance value to an actual distance; and selecting, by the unmanned aerial vehicle, a direction having a gradually increasing distance with the obstacle for flying according to the distance with each portion of the obstacle, in order to accomplish obstacle avoidance.
The present application has the following beneficial effects:
According to the ranging obstacle avoidance instrument and the ranging obstacle avoidance method for the unmanned aerial vehicle provided by the present application, the grating is emitted by the grating emitter onto the obstacle by means of the characteristics of the grating, the camera shoots the grating image emitted onto the obstacle, the distance value between the pixel points of the grating image is calculated, and the direction having the gradually increasing distance with the obstacle is selected for flying, in order to accomplish obstacle avoidance. Therefore, the technical problems of low measurement result accuracy and poor anti-jamming capability of the ranging obstacle avoidance instrument in the prior art are solved, and the technical effects of high measurement result accuracy and strong anti-jamming capability of the ranging obstacle avoidance instrument are achieved.

### Brief Description of the Drawings

To illustrate technical solutions in the embodiments of the present invention or in the prior art more clearly, a brief introduction on the accompanying drawings which are needed in the description of the embodiments is given below. Apparently, the accompanying drawings in the description below are merely some of the embodiments of the present invention.
Fig. 1 is a structural schematic diagram of a ranging obstacle avoidance instrument in a preferred embodiment of the present application.
Fig. 2 is a partial schematic diagram of a bracket in Fig. 1.
Fig. 3 is a flowchart of a ranging obstacle avoidance method for an unmanned aerial vehicle in another preferred embodiment of the present application.

### Reference signs:

100-ranging obstacle avoidance instrument, 1-grating emitter, 2-camera, 3-bracket, 200-obstacle.

### Detailed Description of the Embodiments

To better understand the aforementioned technical solutions, the aforementioned technical solutions will be illustrated below in detail in conjunction with the accompany drawings in the description and specific embodiments.

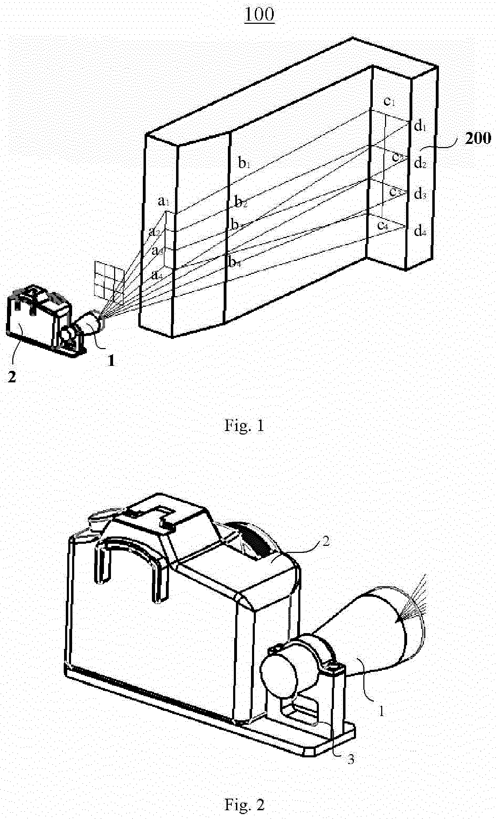

Fig. 1 is a structural schematic diagram of a ranging obstacle avoidance instrument in a preferred embodiment of the present application. As shown in Fig. 1, the ranging obstacle avoidance instrument 100 includes a grating emitter 1, a camera 2 and a grating processor.

The grating emitter 1 emits grating onto an obstacle 200, and the camera shoots grating image emitted onto the obstacle 200. The grating processor connected with the camera 2 and is used for processing the grating image shot by the camera 2; during an operation, the grating processor judges the distance between each portion of the obstacle 200 and the ranging obstacle avoidance instrument 100 by measuring a distance value between pixel points of the grating image shot by the camera 2 and depending on a proportion of the distance value to an actual distance. In addition, a lens filter of the camera 2 is matched with the type of the grating emitted by the grating emitter 1, so as to guarantee the definition of the grating image shot by the camera 2. The grating emitter 1 can emit visible grating or invisible grating, and the lens filter of the camera 2 is specifically a lens filter for selecting a specific wavelength for the visible or invisible grating according to the visible or invisible grating.

Please refer to Fig. 2, to conveniently fix the grating emitter 1 and the camera 2, the ranging obstacle avoidance instrument 100 further includes a bracket 3, one end of the bracket 3 is fixedly connected with the camera 2, and the other end of the bracket is fixedly connected with the laser grating emitter 1 in a detachable manner. The bracket 3 is fixedly connected with the grating emitter 1 by a hoop or a buckle.

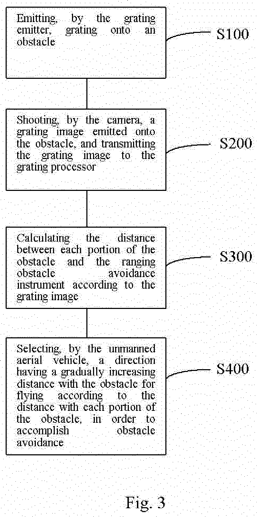

Based on the same inventive concept, the present application further provides a ranging obstacle avoidance method for an unmanned aerial vehicle adopting the aforementioned ranging obstacle avoidance instrument. Please refer to Fig. 3, the ranging obstacle avoidance method for the unmanned aerial vehicle includes:
step S100, the grating emitter emits grating onto an obstacle.
Step S200, the camera shoots a grating image emitted onto the obstacle, and transmits the grating image to the grating processor.
Step S300, the distance between each portion of the obstacle and the ranging obstacle avoidance instrument is calculated according to the grating image.

The step S300 calculating the distance between each portion of the obstacle and the ranging obstacle avoidance instrument according to the grating image specifically includes: measuring, by the grating processor, a distance value between pixel points of the grating image shot by the camera, and calculating the distance between each portion of the obstacle and the ranging obstacle avoidance instrument depending on a proportion of the distance value to an actual distance.

Step S400, the unmanned aerial vehicle selects a direction having a gradually increasing distance with the obstacle for flying according to the distance with each portion of the obstacle, in order to accomplish obstacle avoidance.

### Embodiment

The ranging obstacle avoidance method for the unmanned aerial vehicle is illustrated below by examples. The ranging obstacle avoidance method for the unmanned aerial vehicle is illustrated by presetting a grid number of the grating emitted by the grating emitter. As shown in Fig. 1, the grating emitted by the grating emitter is 3×3 grids. It can be seen from Fig. 1 that the further the obstacle is away from the unmanned aerial vehicle, the larger the size of each grid of the grating emitted onto the obstacle is, and similarly the larger the size of each grid of the grating mapped onto the picture shot by the camera is. In Fig. 1, the distances from a₁, a₂, a₃ and a₄ to the unmanned aerial vehicle are equal, the distances from each grid of the grating on mapped onto the picture shot by the camera to a₁, a₂, a₃ and a₄ are equal, and the distance between d₁ and d₁ is greater than the distance between a₁ and a₂. The distance between each portion of the obstacle and the unmanned aerial vehicle is calculated according to the proportion of the set distance between the pixel points of the shot grating image and the actual distance, and the direction having the gradually increasing distance with the obstacle is selected for flying, in order to accomplish obstacle avoidance.

The present application has the following beneficial effects:
According to the ranging obstacle avoidance instrument and the ranging obstacle avoidance method for the unmanned aerial vehicle provided by the present application, the grating is emitted by the grating emitter onto the obstacle by means of the characteristics of the grating, the camera shoots the grating image emitted onto the obstacle, the distance value between the pixel points of the grating image is calculated, and the direction having the gradually increasing distance with the obstacle is selected for flying, in order to accomplish obstacle avoidance. Therefore, the technical problems of low measurement result accuracy and poor anti-jamming capability of the ranging obstacle avoidance instrument in the prior art are solved, and the technical effects of high measurement result accuracy and strong anti-jamming capability of the ranging obstacle avoidance instrument are achieved.

Finally, it should be noted that the above specific embodiments are merely used for illustrating the technical solutions of the present invention, rather than limiting the same. Although the present invention has been described in detail with reference to the examples, those of ordinary skill in the art should understand that modifications or equivalent substitutions can be made to the technical solutions of the present invention without departing from the spirit and scope of the technical solutions of the present invention, and these modifications or equivalent substitutions shall fall within the scope of the claims of the present invention.

## Claims

1. A ranging obstacle avoidance instrument (100), comprising:
a grating emitter (1) for emitting grating onto an obstacle (200);
a camera (2) for shooting a grating image emitted onto the obstacle (200); and
a grating processor, connected with the camera (2) and used for processing the grating image shot by the camera (2);
wherein the grating processor judges the distance between each portion of the obstacle (200) and the ranging obstacle avoidance instrument (100) by measuring a distance value between pixel points of the grating image shot by the camera (2) and
depending on a proportion of the distance value to an actual distance.

2. The ranging obstacle avoidance instrument (100) of claim 1, further comprising a bracket (3), wherein one end of the bracket (3) is fixedly connected with the camera (2), and the other end of the bracket (3) is fixedly connected with the laser grating emitter (1) in a detachable manner.

3. The ranging obstacle avoidance instrument (100) of claim 2, wherein the bracket (3) is fixedly connected with the grating emitter (1) by a hoop.

4. The ranging obstacle avoidance instrument (100) of claim 2, wherein the bracket (3) is fixedly connected with the grating emitter (1) by a buckle.

5. The ranging obstacle avoidance instrument of claim 1, wherein a lens filter of the camera (2) is matched with the type of the grating emitted by the grating emitter (1).

6. The ranging obstacle avoidance instrument (100) of claim 1, wherein the grating emitted by the grating emitter (1) is visible grating.

7. The ranging obstacle avoidance instrument of claim 1, wherein the grating emitted by the grating emitter (1) is invisible grating.

8. A ranging obstacle avoidance method for an unmanned aerial vehicle adopting the ranging obstacle avoidance instrument (100) of any one of claims 1-7, wherein the ranging obstacle avoidance method comprises:
emitting, by the grating emitter (1), grating onto an obstacle (200);
shooting, by the camera (2), a grating image emitted onto the obstacle (200), and
transmitting the grating image to the grating processor;
calculating the distance between each portion of the obstacle (200) and the ranging obstacle avoidance instrument (100) according to the grating image, which specifically comprises: measuring, by the grating processor, a distance value between pixel points of the grating image shot by the camera (2), and calculating the distance between each portion of the obstacle (200) and the ranging obstacle avoidance instrument (100) depending on a proportion of the distance value to an actual distance; and
selecting, by the unmanned aerial vehicle, a direction having a gradually increasing distance with the obstacle (200) for flying according to the distance with each portion of the obstacle (200), in order to accomplish obstacle avoidance.
